# EUROPEAN PATENT APPLICATION

(11) **EP 3 949 754 A1**
(43) Date of publication of application: **09.02.2022**
(21) Application number: 20785324.3
(22) Date of filing: 31.03.2020
(51) Int. Cl.: A23L 11/10

(54) **INDUSTRIAL METHOD FOR THE CONTINUOUS PROCESSING OF PARTICULATE FOOD INGREDIENTS**

(30) Priority: 01.04.2019 ES 201930296
(71) Applicant: Aurum Process Technology, S.L., 30560 Alguazas (Murcia) (ES)
(72) Inventor: LINARES GIL, Jesús María, 30560 Alguazas (Murcia) (ES)
(74) Representative: Herrero & Asociados, S.L.
(86) International application number: PCT/ES2020/070214
(87) International publication number: WO 2020/201601

(57) **Abstract**

Industrial method for the continuous processing of particulate food ingredients, such as legumes, cereals, fruits, vegetables, etc. The solid ingredient is introduced continuously from the top of a vertical vessel and flows downwards inside, while a liquid is introduced continuously from the bottom and rises countercurrent between the solid particles of the ingredient, with specific conditions at each height level. The processed solid ingredient is extracted as it reaches the bottom of the vessel, while the liquid is extracted from the top of the process vessel.

In this way, various production processes such as washing, hydration, cooking or sterilisation of particulate ingredients can be simplified and precisely controlled by regulating the inflow and outflow of solid ingredients and process liquid separately and controlling their specific conditions at each stage.

## Description

### TECHNICAL SECTOR

The present invention belongs to the field of the food industry.

It refers to a new system for processing solid particulate ingredients that can be applied in many industrial manufacturing processes, being particularly suitable for the rehydration, cooking and sterilization of legumes and cereals, and for the sterilization of fruit and vegetables.

### BACKGROUND TO THE INVENTION

The use of legumes in food is a millenary tradition that dates back to human prehistory, including under this denomination a wide variety of plant seeds that are classified in botany as legumes, among which beans, chickpeas, lentils, peas and lupines stand out.

Traditionally, in domestic cooking, it is customary to soak legumes for several hours (usually overnight) before cooking. In this hydration process, the legume absorbs a large amount of water, normally increasing its weight to more than double its initial dry weight, thus reducing the time needed to cook the legumes properly and to obtain a uniform and soft final texture.

With the development of the food industry, this same hydration process has been transferred to an industrial scale. Factories that produce cooked legumes or other food products based on legumes have specific facilities for the prior hydration of dried legumes. The hydration is normally carried out in tanks or ponds in which the legumes are placed and flooded with water for the time required to complete hydration.

The main disadvantage of this hydration process is that it normally requires a relatively long time, more than 8 or even 12 hours, which makes it necessary to accumulate a very large volume in the hydration tanks to maintain industrial production, and these working conditions with long times and large volumes generate significant complications and costs in the industrial process, which requires a great deal of human labor, consumes a great deal of energy and water, and affects the quality of the final product due to the inability to precisely control the hydration conditions and times. The microbiological risks during the process is high, as the humidity and temperature conditions are ideal for microbial proliferation.

There are few inventions specifically referring to methods that improve the hydration of legumes or reduce the time required for this, as most of the patents registered so far describe or protect specific hydration conditions that are suitable for conferring a certain quality to the treated legumes, such as rapid cooking, improved digestibility, etc., but do not define methods or machinery to improve or accelerate the hydration process itself. However, we can cite as background to our invention:
- Patent US3869556A, proposing a process for treating chickpeas and red kidney beans for fast cooking, where certain hydration conditions are specified for a period of 24 hours.
- Patent US4729901A, which proposes a process for the manufacture of canned legumes that specifies a formulation of additives in the water of hydration.
- Patents US6355291 B1, US6465031B1 and US20060198934A1 describe methods of preparing legumes to improve their digestibility and reduce the generation of flatulence, describing several hydration stages with different temperatures and chemical compositions for purposes other than optimizing hydration, and without defining the industrial machinery used in the process.
- Patent US3869556A, proposing a process for treating chickpeas and red kidney beans for fast cooking, where certain hydration conditions are specified for a period of 24 hours.
- Patent US8003154B2, which proposes a process for manufacturing refried beans that includes a non-specific hydration step.
- Patent US6033692A, which proposes a method of hydrating legumes with the purpose of reducing the hydration time by means of an enzymatic treatment carried out by certain agents added to the hydration water.

About the industrial cooking of vegetables and the heat treatment of fruit and vegetables, there are many established methods, some of them specifically defined for continuous production. We can cite as antecedents of this invention:
- Patent US4214013A, proposing a method of cooking legumes with a process liquid in a process vessel, from which both components are extracted together.
- Patents US4155293A and US4561347A, propose methods using continuous cooking vessels, but they are horizontal vessels.
- Patent US5374435A, which proposes a method of cooking particulate products with a process liquid in a process vessel, but which does not operate in a continuous operation.
- Patent DE19805773A1, defining a method of sterilizing particulate products without process liquid.
- Patent US20010047814A1, which defines a method of continuously sterilizing fruit by immersion in a liquid through a horizontal vessel.
- Patent EP0272087B1, which proposes a method of continuous sterilization of a particulate product advancing together with a process liquid.

### DESCRIPTION OF THE INVENTION

The industrial processing method of this invention is based on a very simple principle which, however, has so far not been exploited in the industrial processing of solid particulate food ingredients: the ability to make a liquid flow through solid particles moving in the opposite direction to the liquid.

Taking advantage of this principle, according to this method, the solid ingredient is continuously introduced from the top of a vertical process vessel and flows downwards inside the vessel, while a process liquid is also continuously introduced from the bottom of the vessel and flows upwards in a countercurrent flowing between the solid particles of the ingredient.

The processed solid ingredient is continuously extracted as it reaches the bottom of the process vessel, while the process liquid is extracted from the top of the process vessel, also continuously.

For the introduction of the solid ingredient through the top of the vertical process vessel, suitable means are used, such as conveyor belts, pneumatic conveying, etc., which discharge into the top of the process vessel.

A pumping system is used for the extraction of the solids from the bottom of the process vessel, followed by a possible total or partial reintroduction of the extracted process liquid together with the solids.

Along the vertical process vessel, there may optionally be process liquid inlet and outlet connections at different height levels. This makes it possible to modify the conditions of the process liquid flowing inside the vessel, to increase or decrease its temperature (by passing it through an external heat exchanger), to modify its composition (by adding or removing components or additives) or to vary its flow rate (by adding new liquid or removing part of the extracted liquid).

In this way, specific process conditions can be regulated at each height level along the process vessel.

For the introduction, reintroduction or withdrawal of the process liquid into the lower, intermediate and upper part of the process vessel, appropriate means are used, usually centrifugal booster pumps.

The method described above allows for the simplification and precise control of several common food processing processes, such as washing, hydration, cooking or sterilization of particulate ingredients, by regulating the incoming and outgoing flows of solid ingredients and process liquid separately and controlling their specific conditions at each stage of the process, which improves the quality of the final product while reducing processing times and water and energy consumption, making this method highly suitable for the growing global demand for industrially processed foods.

### DETAILED DESCRIPTION

A first preferred embodiment of the described method allows the hydration of legumes by significantly reducing the time needed to complete the hydration process, based on the behavior of legumes when they are subjected to temperature changes during hydration, being precisely the alternation of contact with hot and cold water what accelerates the hydration process of the legumes.

For this preferred embodiment, two intermediate levels of reconditioning of the process liquid are established in the vertical process vessel, so that hydration water at a temperature of around 80°C is introduced through the lower part of the vertical vessel, preferably between 65°C and 95°C which is withdrawn in the first intermediate level to be cooled and reintroduced at a temperature of about 35°C, preferably between 20°C and 45°C, and is withdrawn again in the second intermediate level, to be heated again to a temperature of about 80°C, preferably between 65°C and 95°C.

In this way, the legumes that are being hydrated, as they go down the inside of the processing vessel, are first in contact with hot water, then, in a second stage of the process, they are in contact with cold water and finally, in a third stage of the process, they are again in contact with hot water.

A second preferred embodiment of the invention allows the cooking of legumes in a continuous line, with the aquafaba (liquid phase resulting from cooking) being obtained separately.

In this second embodiment, the legumes are continuously introduced into the vertical process vessel, where they are cooked while descending inside it, in counter-current with the cooking water that advances in the opposite direction, the cooking temperature being controlled and regulated along the process vessel by injecting steam at various intermediate height levels of the vessel.

In this case, the vertical processing vessel may be pressurized to allow the cooking of the legumes at a temperature above 100°C, preferably between 100°C and 150°C, with a suitable system to allow the introduction of the legumes into the pressurized vessel.

Through the upper part of the process vessel, the cooking water that has completed its journey through the vessel is continuously extracted. This vegetable cooking water is known as aquafaba and is increasingly in demand on the market as a natural, vegetable-based substitute for egg white.

The vessel may also have a final cooling section for the cooked legumes before they are removed from the lower end of the vessel. This simply requires that the cooking water introduced at the bottom of the vessel enters cold, as it will be preheated by the legumes themselves being cooled and then brought to the appropriate temperature for cooking the legumes by the injection of steam at intermediate height levels of the process vessel.

A third preferred embodiment of the invention, which also has great potential for use in the food industry, is the continuous sterilization of chopped fruit and vegetables, for which the pieces are introduced at the top of the vertical process vessel and are subjected to a first heating stage until the desired sterilization temperature is reached, then they continue their descent through the process vessel in a second temperature maintenance stage and finally undergo a third cooling stage before being removed from the process vessel.

In this third preferred embodiment, the process water entering from the bottom of the vertical process vessel may have been pre-sterilized to avoid contamination of the chunks being cooled after sterilization, so that the chunks can be directly packaged under aseptic conditions.

## Claims

1. An industrial method for the continuous in-line processing of solid particulate food ingredients, such as legumes, cereals, fruits, vegetables, which is carried out in a vertically positioned process vessel, **characterized in that**, during the process, the solid particulate ingredient is continuously fed into the process vessel from the top of the process vessel, it flows down through the inside of the process vessel and is extracted from the bottom of the process vessel, while a process liquid is introduced, also continuously, through the bottom of the process vessel, flows up through the inside of the process vessel and flows between the particles of the solid particulate ingredient and is extracted from the top of the process vessel.

2. The industrial processing method according to claim 1 wherein additional process liquid inlet and/or outlet connections for process liquid are located at intermediate height levels of the process vessel, allowing the conditions of temperature, flow rate and/or chemical composition of the process liquid rising inside the process vessel to be changed in order to maintain specific process conditions at each height level of the process vessel.

3. The industrial processing method according to claim 1 wherein there are steam inlet connections to the process vessel located at intermediate height levels of the process vessel.

4. The industrial processing method according to claim 1 wherein the process vessel has within it some mechanical element actuated to influence the movement of the particles of the solid particulate ingredient within the process vessel, or to otherwise modify the process conditions.

5. The industrial processing method according to claim 1 wherein the solid particulate ingredient is subjected to hydration and/or cooking treatments.

6. The industrial processing method according to claim 1 wherein the solid particulate ingredient receives a high temperature sterilization treatment followed by cooling prior to removal from the process vessel under aseptic conditions.

7. The industrial processing method according to claim 1 wherein the solid particulate ingredient is a legume that receives a cooking treatment and the process liquid is extracted under sterile conditions for subsequent packaging as aquafaba.
